# EUROPEAN PATENT APPLICATION

(11) **EP 4 583 598 A1**
(43) Date of publication of application: **09.07.2025**
(21) Application number: 23860878.0
(22) Date of filing: 30.08.2023
(51) Int. Cl.: H04W 64/00, H04W 4/40, H04W 24/08, H04W 4/02, H04W 88/18

(54) **METHOD AND APPARATUS FOR GENERATING AND TRANSMITTING MESSAGE ON BASIS OF TERMINAL LOCATION PREDICTION**

(30) Priority: 30.08.2022 KR 20220109406
(71) Applicant: LG Electronics Inc., Yeongdeungpo-gu Seoul 07336 (KR)
(72) Inventor: KIM, Heejin, Seoul 06772 (KR); SEO, Hanbyul, Seoul 06772 (KR)
(74) Representative: Frenkel, Matthias Alexander
(86) International application number: PCT/KR2023/012896
(87) International publication number: WO 2024/049202

(57) **Abstract**

A method for performing wireless communication by a first device, and an apparatus supporting same are provided. The method may comprise the steps of: generating a first message comprising first state information of the first device; transmitting the first message to a second device; acquiring prediction state information of the first device; generating a second message comprising second state information of the first device on the basis of a difference between future state information of the first device, predicted on the basis of the first state information, and the prediction state information, the difference being equal to or greater than a first threshold value; and transmitting the second message to the second device.

## Description

### TECHNICAL FIELD

This disclosure relates to a wireless communication system.

### BACKGROUND ART

A wireless communication system is a multiple access system that supports communication of multiple users by sharing available system resources (e.g. a bandwidth, transmission power, etc.) among them. Examples of multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi-Carrier Frequency Division Multiple Access (MC-FDMA) system.

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic.

Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Vehicle-to-everything (V2X) communication may also be supported in NR.

### DISCLOSURE

### TECHNICAL SOLUTION

In an embodiment, provided is a method for performing wireless communication by a first device. The method may comprise: generating a first message including first state information of the first device; transmitting the first message to a second device; obtaining predicted state information of the first device; generating, based on that a difference between future state information of the first device predicted based on the first state information and the predicted state information is greater than or equal to a first threshold value, a second message including second state information of the first device; and transmitting the second message to the second device.

In an embodiment, provided is a first device adapted to perform wireless communication. The first device may comprise: at least one transceiver; at least one processor; and at least one memory connected to the at least one processor and storing instructions that, based on being executed by the at least one processor, cause the first device to perform operations comprising: generating a first message including first state information of the first device; transmitting the first message to a second device; obtaining predicted state information of the first device; generating, based on that a difference between future state information of the first device predicted based on the first state information and the predicted state information is greater than or equal to a first threshold value, a second message including second state information of the first device; and transmitting the second message to the second device.

In an embodiment, provided is a processing device adapted to control a first device. The processing device may comprise: at least one processor; and at least one memory connected to the at least one processor and storing instructions that, based on being executed by the at least one processor, cause the first device to perform operations comprising: generating a first message including first state information of the first device; transmitting the first message to a second device; obtaining predicted state information of the first device; generating, based on that a difference between future state information of the first device predicted based on the first state information and the predicted state information is greater than or equal to a first threshold value, a second message including second state information of the first device; and transmitting the second message to the second device.

In an embodiment, provided is a non-transitory computer-readable storage medium storing instructions. The instructions, when executed, may cause a first device to perform operations comprising: generating a first message including first state information of the first device; transmitting the first message to a second device; obtaining predicted state information of the first device; generating, based on that a difference between future state information of the first device predicted based on the first state information and the predicted state information is greater than or equal to a first threshold value, a second message including second state information of the first device; and transmitting the second message to the second device.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows a general structure of a vulnerable road users awareness message (VAM), based on an embodiment of the present disclosure.
FIG. 4 shows an example of a model in which a collision/accident risk prediction and/or a position of a UE is performed, based on an embodiment of the present disclosure.
FIG. 5 shows a method for generating/interpreting path prediction information, based on an embodiment of the present disclosure.
FIG. 6 shows a method for a first device to perform wireless communication, based on an embodiment of the present disclosure.
FIG. 7 shows a method for a second device to perform wireless communication, based on an embodiment of the present disclosure.
FIG. 8 shows a communication system 1, based on an embodiment of the present disclosure.
FIG. 9 shows wireless devices, based on an embodiment of the present disclosure.
FIG. 10 shows a signal process circuit for a transmission signal, based on an embodiment of the present disclosure.
FIG. 11 shows another example of a wireless device, based on an embodiment of the present disclosure.
FIG. 12 shows a hand-held device, based on an embodiment of the present disclosure.
FIG. 13 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile internet, high throughput, high network capacity, high energy efficiency, low backhaul and access network congestion, and enhanced data security.

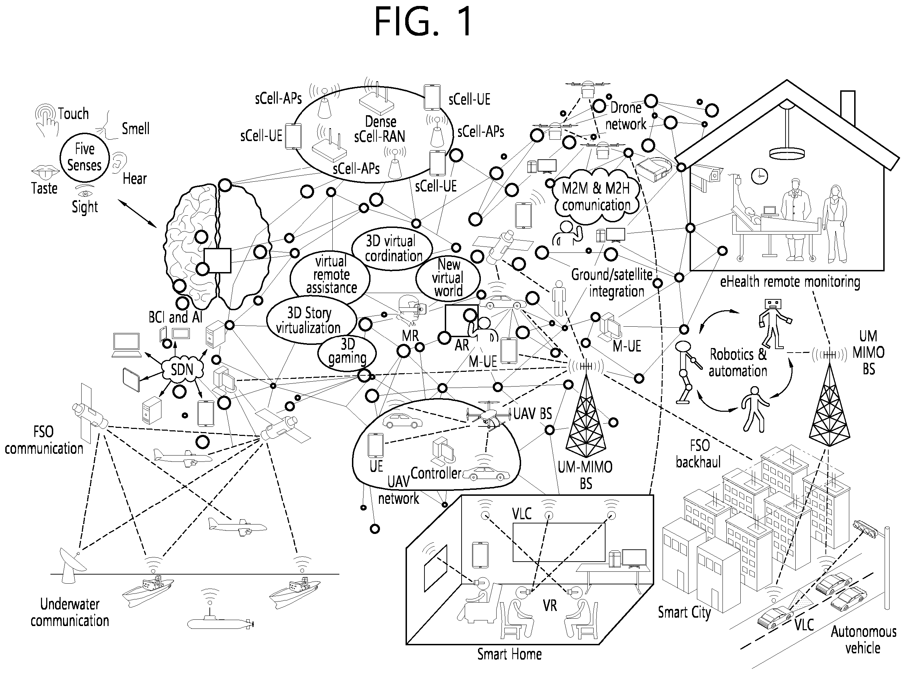

FIG. 1 shows a communication structure providable in a 6G system, based on an embodiment of the present disclosure. The embodiment of FIG. 1 may be combined with various embodiments of the present disclosure.

The 6G system will have 50 times higher simultaneous wireless communication connectivity than a 5G wireless communication system. URLLC, which is the key feature of 5G, will become more important technology by providing end-to-end latency less than 1 ms in 6G communication. The 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In 6G, new network characteristics may be as follows.
- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5 GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduces costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5 GB network in order to ensure flexibility, reconfigurability and programmability.

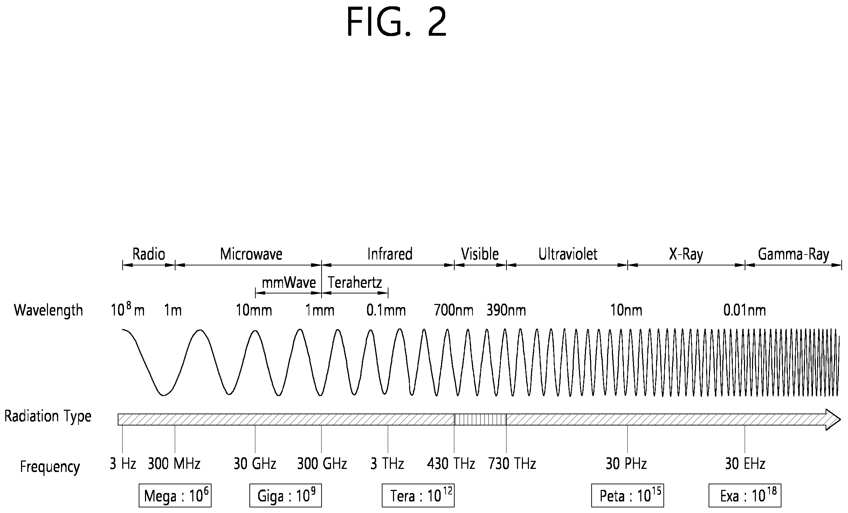

Core implementation technology of 6G system is described below.
- Artificial Intelligence (AI): Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical backhaul network (FSO Backhaul Network)
- Non-terrestrial networks (NTN)
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Autonomous driving (self-driving): For perfect autonomous driving, it is necessary to notify dangerous situation of each other through communication between vehicle and vehicle, to check information like parking information location and signal change time through communication between vehicle and infrastructure such as parking lots and/or traffic lights. Vehicle to everything (V2X) that is a core element for establishing an autonomous driving infrastructure is a technology that vehicle communicates and shares with various elements in road for autonomous driving such as vehicle to vehicle (V2V), vehicle to infrastructure (V2I). To maximize a performance of autonomous driving and to secure high safety, high transmission speed and low latency technology have to be needed. Furthermore, to directly control vehicle in dangerous situation and to actively intervene vehicle driving beyond a level of a warning or a guidance message to driver, as the amount of the information to transmit and receive is larger, autonomous driving is expected to be maximized in 6G being higher transmission speed and lower latency than 5G.

For clarity in the description, 5G NR is mainly described, but the technical idea according to an embodiment of the present disclosure is not limited thereto. Various embodiments of the present disclosure can also be applied to 6G communication systems.

Meanwhile, the message transmission method in the current intelligent transport system (ITS) standard is as follows.

The messages defined in the current ITS standard may be divided into periodic transmission and/or aperiodic transmission (e.g., event-triggered transmission) depending on the type of message. In this case, "periodic transmission" basically means that a message is generated/transmitted based on a (pre-)defined/configured message transmission period, and if a (pre-)defined/configured message generation/transmission triggering condition is satisfied, it means a message transmission method that allows message generation/transmission at a specific time within the defined/configured period. In other words, a message defined to be transmitted periodically should be generated/transmitted based on the (pre-)defined/configured period even if an event corresponding to the (pre-)defined/configured message generation/transmission triggering condition does not occur. This means that, regardless of whether the event corresponding to the message generation/transmission triggering condition occurs, the time interval between the previous message transmission (e.g., the Nth message transmission) and the next message transmission (the (N+1)th message transmission) cannot be longer than a (pre-)defined/configured time interval (e.g., the message generation/transmission period).

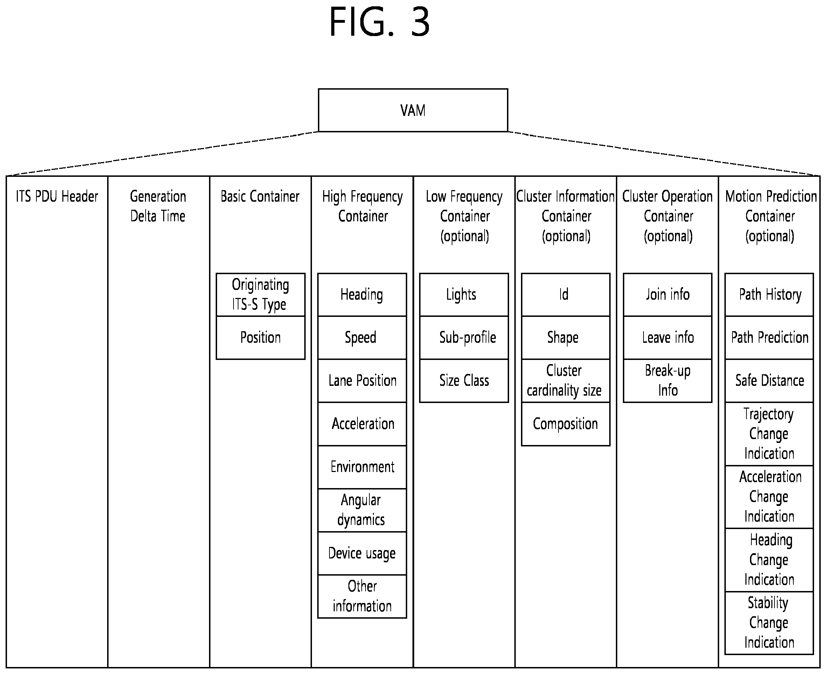

Meanwhile, optional data fields such as path history/prediction, and so on, in the current ITS standard may be defined as in FIG. 3.

FIG. 3 shows a general structure of a vulnerable road users awareness message (VAM), based on an embodiment of the present disclosure. The embodiment of FIG. 3 may be combined with various embodiments of the present disclosure.

Referring to FIG. 3, the message structure/format in the current ITS standard is defined as the mandatory container/data/field and the optional container/data/field. For example, the vulnerable road users awareness message (VAM) defined for the purpose of vulnerable road users (VRU) awareness basic service includes containers as shown in FIG. 3, and each container includes one or more data fields (DF). In addition, each container/DF is defined in the ITS standard by being classified as a mandatory container/DF, which should be included in message transmission, or an optional container/DF.

Meanwhile, as shown in FIG. 3, in the case of a message for VRU protection such as VAM, DFs such as path history, path prediction, and so on, may be included in the message and transmitted. Herein, in the current ITS standard, the path history/prediction DF is expressed as one or more, but not more than 40, path points, and each path point includes the path position, which is the position information of the VRU path, and the path data time (path delta time) information, which represents the time of the corresponding path position information. Table 2 shows an example of the path history information.

**[Table 2]**

| | |
|---|---|
| Description | This DF represents the VRU's recent movement over some past time and/or distance. It consists of a list of path points, each represented as DF *PathPoint.* The list of path points may consist of up to 40 elements (see further details in clause 7.3.6). |
| Insertion in VAM | Optional. |
| Data setting and presentation requirements | The DF shall be presented as specified in ETSI TS 102 894-2 [7] A117 *pathHistory.* It consists of up to 40 *PathPoint,* as specified in ETSI TS 102 894-2 [7] A118. Each *PathPoint* consists of pathPosition (A109) and an optional pathDeltaTime (A47) with granularity of 10 ms. |

However, the ITS standard does not specify the detailed message operation method, such as under what conditions (e.g., VRU position, surrounding conditions, communication environment, etc.) the optional container/DF should be included in the message and transmitted, and there is no definition in the standard as to how the number of path points that should be (or can be included) in the message is adjusted/determined, etc., based on what conditions/criteria, for DFs including one or more path points, such as path history/prediction. Herein, the size of the generated/transmitted VRU message may vary depending on whether the optional DF/container such as the path history/prediction DF is included in the VRU message, or how many path points are included in the message if the path history/prediction DF is included in the VRU message and transmitted. Since the size of the message transmitted by the VRU may affect the amount of data traffic transmitted by the VRU UE to the other VRU/vehicle/RSU/base station, the transmit power/electricity/time length required for the message transmission of the VRU UE, etc., it is desirable that the message be composed in a way that can reduce the size of the message of data transmitted by the VRU (or including information for the VRU).

Meanwhile, the roles/states of the VRU in the current ITS standard may be defined as follows.

The messages defined in the current ITS standard may be divided into periodic transmission and/or aperiodic transmission (e.g., event-triggered transmission) depending on the type of message. In this case, "periodic transmission" basically means that a message is generated/transmitted based on a (pre-)defined/configured message transmission period, and if the (pre-)defined/configured message triggering condition is satisfied, the message generation/transmission may be performed within the time interval within the configured period. For example, based on the ETSI ITS standard (ETSI TS 103 300-3), in the case of a VAM message, if the VRU UE is in the VRU-ACTIVE STANDALONE state and one or more of the conditions in Table 3 are satisfied, the VAM message generation/transmission may be triggered.

**[Table 3]**

| | |
|---|---|
| 1) The time elapsed since the last time the individual VAM was transmitted exceeds *T_GenVamMax.* | |
| 2) The Euclidian absolute distance between the current estimated position of the reference point of the VRU and the estimated position of the reference point lastly included in an individual VAM exceeds a pre-defined threshold *minReferencePointPositionChangeThreshold.* | |
| 3) The difference between the current estimated ground speed of the reference point of the VRU and the estimated absolute speed of the reference point of the VRU lastly included in an individual VAM exceeds a pre-defined threshold *minGroundSpeedChangeThreshold.* | |
| 4) The difference between the orientation of the vector of the current estimated ground velocity of the reference point of the VRU and the estimated orientation of the vector of the ground velocity of the reference point of the VRU lastly included in an individual VAM exceeds a pre-defined threshold *minGroundVelocityOrientationChangeThreshold.* | |
| 5) The VRU has determined that there is a difference between the current estimated trajectory interception probability with vehicle(s) or other VRU(s) and the trajectory interception probability with vehicle(s) or other VRU(s) lastly reported in an individual VAM exceeds a predefined threshold *minTrajectoryInterceptionProbChangeThreshold.* | |
| 6) The originating ITS-S is a VRU in VRU-ACTIVE-STANDALONE VBS state and has decided to join a cluster after its previous individual VAM transmission. | |
| 7) VRU has determined that one or more new vehicles or other VRUs have satisfied the following conditions simultaneously after the lastly transmitted VAM: | |
| | - Coming closer than minimum safe lateral distance (MSLaD) laterally. |
| | - Coming closer than minimum safe longitudinal distance (MSLoD) longitudinally. |
| | - Coming closer than minimum safe vertical distance (MSVD) vertically. |

Meanwhile, in ETSI TS 103 300-3, the roles/states of the VRU UE are defined as in Tables 4 and 5. Table 4 shows the possible roles of the VRU during VRU basic service operation. Table 5 shows the possible states of VRU basic services related to cluster operation. If the VRU UE determines that it is in a zero-risk area (e.g., located inside a car/bus/building), it may switch to the VRU_ROLE_OFF state, and in this state, the VRU UE does not perform any transmission/reception of VAM, which is a VRU message.

**[Table 4]**

| VRU role | Specification | Valid VRU profiles | Valid VRU types | Additional explanation |
|---|---|---|---|---|
| VRU_ROLE_ON | The device user is considered as a VRU. | ALL | ALL | The VBS state should be changed according to the condition of VRU device user as notified by the VRU profile Management entity. The VRU device can send VAMs, receive VAMs, or both while checking the position of VRU device user through the PoTi entity. Except for VRUs of profile 3, it may execute the VRU clustering functions (see clause 5). |
| | Based on information received from VRU profile management entity, the VBS shall check the type of VRU and the profile of VRU. It shall also handle the VBS clustering state and provide services to other entities, as defined in clause 5. | | | |
| VRU_ROLE_OFF | The device user is not considered as a VRU. The VRU device shall neither send nor receive VAMs. | ALL | ALL | The VRU is located in a "zero- risk" geographical area, for example in a bus, in a passenger car, etc. The VBS remains operational in this state to monitor any notification that the role has changed to VRU_ROLE_ON. |

In addition, based on ETSI TS 103 300-3, the VRU UE may switch its state to VRU-passive if it determines that it is in a low-risk area, and in this case, it is allowed for the VRU UE not to perform VAM message transmission. Therefore, in summary of the above, although VAM is defined as a message that is transmitted periodically in the current ETSI ITS standard, if the VRU is in a zero/low-risk area, it is supported/allowed in the standard that the VRU UE does not transmit the message.

**[Table 5]**

| VRU State | Specification | Valid VRU profiles | Valid VRU types | Additional explanation |
|---|---|---|---|---|
| VRU-IDLE | The device user is not considered as a VRU | ALL | ALL | The VRU role as defined in clause 4.2 is VRU_ROLE_OFF. |
| VRU-ACTIVE- STANDALONE | VAMs or CAMs (in case of VRU Profile 2) are transmitted with information related to only that VRU. | ALL | VRU- St, VRU- Tx | In this state a VRU ITS-S may indicate an intention to join a cluster, or indicate that it has just left a cluster. |
| VRU-ACTIVE- CLUSTER-LEADER | VAMs are transmitted and include a container with specific data elements related to the cluster | VRU profile 1, | VRU-St | |
| | | VRU profile 2 | | |
| VRU-PASSIVE | The VRU device does not transmit VAMs | ALL except | VRU-St, | The VRU is member of a cluster or located in a low-risk geographical area defined in clause 3.1 (see FCOM03 in ETSI TS 103 300-2 [1]). |
| | | VRU profile 3 | VRU- Tx | |
| | | | | In the case the area rules authorize the traffic of motor vehicles, the VBS can also remain in VRU-ACTIVE- STANDALONE VBS state and increase the periodicity of the VAMs. |

Meanwhile, the current ITS standard considers only broadcast transmission of the cooperative awareness message (CAM) message, and the message is transmitted periodically (even without a special event). When the UE transmits the CAM message using Uu link, rather than transmitting the CAM message periodically, it may be more efficient for the transmitting UE (or server/cloud), which has predicted the position of the UE, to transmit the message to the server/cloud through UL (or for the server to transmit (forward) the message from the transmitting UE to the receiving UE through DL), only if the position of the transmitting UE exceeds a (pre-)configured specific threshold. Through this, the effect of reducing UL and/or DL traffic can be obtained. That is, from the perspective of standard change, the maximum transmission period of CAM (e.g., 1 second) defined in the current ITS standard may be deleted, and "if the difference between the position of the transmitting UE predicted by the transmitting UE (or server/cloud) and the actual current position of the transmitting UE is equal to or greater than a (pre-)configured specific threshold" may be added as the message generation triggering condition.

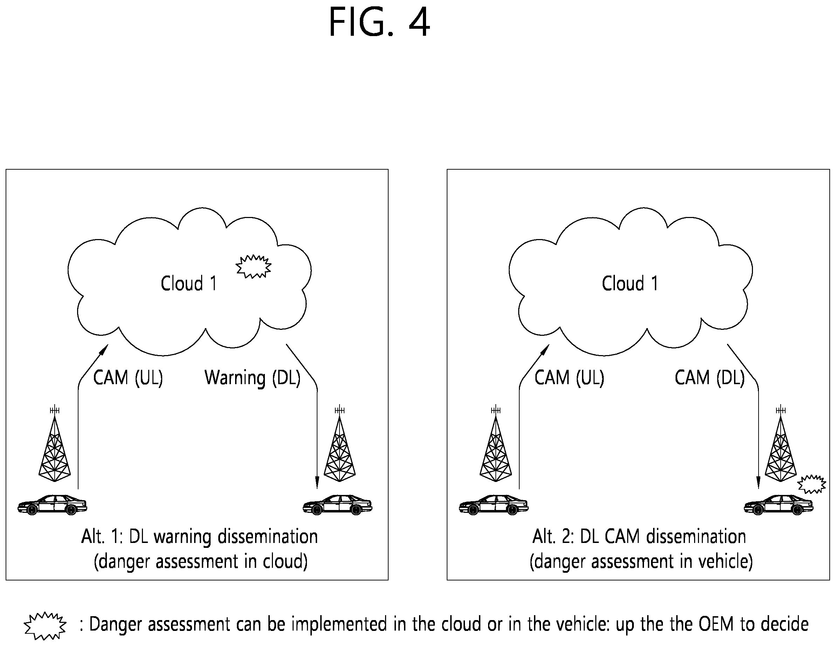

FIG. 4 shows an example of a model in which a collision/accident risk prediction and/or a position of a UE is performed, based on an embodiment of the present disclosure. The embodiment of FIG. 4 may be combined with various embodiments of the present disclosure.

Specifically, Alt. 1 of FIG. 4 shows an example of a model in which a collision/accident risk prediction and/or a position of a transmitting (and receiving) UE is performed in a server/cloud, and Alt. 2 of FIG. 4 shows an example of a model in which a UE directly performs its own position and/or collision/accident risk prediction.

In the present disclosure, when transmitting various messages/information such as ITS messages (e.g., cooperative awareness message (CAM), decentralized environmental notification message (DENM), VRU awareness message (VAM), basic safety message (BSM), personal safety message (PSM), etc.) through Uu V2X, a method for generating/transmitting a message related to the transmission based on the position of a transmitting UE predicted in the transmitting UE and/or a server/cloud/central-ITS station/mobile edge computing (MEC), and a device supporting the same are proposed.

As shown in FIG. 4, when determining whether to generate a message based on the predicted position of the UE in Uu V2X, the following two scenarios may be considered depending on who predicts the position of the UE.
- Scenario 1 (where the UE position prediction is performed on the side of the transmitting UE): The transmitting UE may predict its own position based on information for its own state (e.g., position and/or velocity and/or acceleration and/or heading, etc.) included in the most recently transmitted message by itself (e.g., CAM/DENM/VAM/BSM/PSM). If the difference between its predicted position and its actual current position is greater than or equal to a (pre-)configured allowable position error level, the transmitting UE may generate a new message including its (latest) information and transmit it to the server/cloud.
- Scenario 2 (where the UE position prediction is performed on the side of the server/cloud/MEC): The server/cloud/central ITS-station/MEC may predict the position of the UE based on information for the UE (e.g., position and/or velocity and/or acceleration and/or heading, etc.) included in the most recently received message from the specific UE (e.g., CAM/DENM/VAM/BSM/PSM). If the difference between the predicted position of the UE and the current actual position of the UE is greater than or equal to a (pre-)configured allowable position error level, the server/cloud may transmit a message including (the latest) information for the UE to UEs located around the UE.

In the case of the method in which the message generation/transmission is triggered based on the position prediction of the UE, such as scenarios 1 and 2, unlike the periodic generation/transmission of messages defined in the current ITS standards (e.g., EN 302 637-2, EN 302 637-3, TS 103 300-3, J2945/9), even if a specific time interval/period (e.g., the maximum value between the generation of the previous message and the generation of the next message) has passed, if the difference between the actual position of the UE and the predicted position of the UE is within an allowable error level, a new message may not be generated. The side that predicts the position of the UE (and determines whether to generate a message based on the prediction) may accurately know whether a message was generated, but the side that receives such a message may have difficulty distinguishing whether the message is not received because it was not generated by the transmitter or because the transmitter generated/transmitted the message but the receiver failed to receive it for some reason. Herein, for example, in the case of scenario 1, the transmitting UE may be interpreted as the transmitter, and the server/cloud (and/or the receiving UE) may be interpreted as the receiver. For example, in the case of scenario 2, the server/cloud may be interpreted as the transmitter, and the receiving UE (which receives the message through DL) may be interpreted as the receiver. Therefore, the receiver (i.e., the side that receives the message generated based on the UE position prediction) needs to distinguish/recognize the situations mentioned above, and if the transmitter generated/transmitted the message but the receiver failed to receive it, the receiver needs to take a corresponding action to obtain information that failed to be received. Hereinafter, various cases of message reception interruption that the receiver needs to distinguish in scenario 1 are described, and the operations of the transmitter/receiver when such cases occur are described.

In the case of scenario 1, in the event of the following, even if the specific time interval (e.g., the length of the pre-configured time interval, the maximum value of the message generation/transmission period defined in the existing ITS standard (e.g., 1 second)) is exceeded, there may be no message received from the specific transmitting UE to the server/cloud/receiving UE.

Event A. When the transmitting UE predicts its own position, the transmitting UE does not generate a message because the difference between its predicted position and its current actual position is within a (pre-configured) allowable error level. Therefore, no message is actually transmitted to the server/cloud by the UE.

Event B. Since the transmitting UE is located in a safe area (e.g., public transportation/inside a building) (regardless of the difference value between its predicted position and its actual position), the transmitting UE does not generate a message. Therefore, no message is actually transmitted to the server/cloud by the UE.

Event C. Although the transmitting UE generates a message and transmits it to the server/cloud, the server/cloud fails to receive the message for some reason (e.g., the channel condition of UL link is not good).

Event D. The transmitting UE moves and leaves the service area of the existing server/cloud.

Event E. The connection between the transmitting UE and the server is lost. For example, the transmitting UE terminates/deletes the application. For example, the transmitting UE is powered off.

In order to enable the receiving UE to determine whether the above-described events A to E have occurred and to distinguish which event has occurred, the "transmitter" may operate based on one or more of the techniques described in the proposal below.

Proposal 1: In scenario 1 (where the UE position prediction is performed on the side of the transmitting UE), the transmitting UE may perform UL transmission including information for its own state to the server/cloud based on a period (e.g., the maximum time interval between messages pre-configured (differently depending on a service/UE type/driving environment of the UE (e.g., road on which it is driving, velocity/speed, position, etc.)) from the time of the last message transmission) longer than a very long period/interval (e.g., the maximum value of the message generation/transmission period defined in the existing ITS standard (e.g., 1 second)) (even if no message generation event occurs based on the position prediction-based message generation rule).

Based on the proposed scheme, if the transmitting UE reports information for its own state to the server at a very long period/interval (even though the difference between its predicted position and its current actual position is within an allowable error range), (1) the transmitting UE may retransmit to the server/cloud the latest message it generated/transmitted based on the position prediction-based message generation scheme (i.e., the message generated by the UE at the most recent time when the UE's position prediction is out of range), or (2) the transmitting UE may transmit only mandatory fields (excluding optional fields) in the message, or (3) the transmitting UE may selectively transmit only some data fields/elements (e.g., station ID, generation time, position, speed, heading, etc.) among the mandatory fields in the message, or (4) the transmitting UE may transmit a (1-bit) indicator to the server/cloud for the purpose of informing the server/cloud that it is moving within an allowable position prediction error level.

As an example of (3) described above, if the difference between the current actual position of the transmitting UE and its predicted position is within an allowable error range, the transmitting UE may transmit information including only its station ID and the generation time of the message it most recently generated/transmitted (or the difference between the generation time and the current time) (based on the prediction-based message generation scheme) to the server/cloud/receiving UE. The above operation of the transmitting UE may be interpreted as the server/cloud/receiving UE receiving the message understanding that the actual position/path of the transmitting UE (i.e., the UE having the station ID included in the message) after a specific time (i.e., the generation time of the message most recently generated/transmitted by the transmitting UE) is within an allowable error range configured/defined in the prediction-based message generation scheme.

In the case where the transmitting UE operates based on the proposed scheme described above, if there is no message received by the receiver (e.g. server/cloud) (from the transmitting UE) during a specific time interval, the receiver may determine that the event C and/or the event D and/or the event E (and/or the event A) has occurred.

Proposal 2: In scenario 1 (where the UE position prediction is performed on the side of the transmitting UE), the transmitting UE may report to the server whether the event has occurred and/or information for the event (e.g., A/B/C/D/E) that has occurred at a specific time (and/or time interval) immediately before/after the occurrence of the event B/D/E described above (and/or at a very long period/interval (e.g., the maximum value of the message generation/transmission period defined in the existing ITS standard (e.g., 1 second) or a period longer than the maximum value)) (even if no message generation event occurs based on the position prediction-based message generation rule).

For example, the transmitting UE may directly determine whether the event A/B/D/E among the events A to E described above have occurred, and may distinguish which event has occurred.

For example, the transmitting UE may report the occurrence of the event A to the server/cloud. However, this operation means that UL transmission should be performed at every time/period when the transmitting UE performs the position prediction operation, which is less necessary because it increases UL traffic.

For example, for the event B/D/E, the transmitting UE may only signal whether (an individual event, or at least one of the B/D/E events) has occurred through a 1-bit indicator. In this case, for example, whether the event has occurred may be reported through a separate indicator/bit for each event. For example, whether the event has occurred may be reported through a 1-bit indicator if at least one event among the B/D/E events has occurred. For example, if at least one event among the B/D/E events has occurred, the occurrence of the event may be reported through a 1-bit indicator.

For example, in the case of the event B, whether the event has occurred may be informed to the server/base station in the form of information such as VRU_Role_Off, VRU-IDLE, VRU-PASSIVE (the roles/states of the UE defined in the existing ETSI VAM standard). Alternatively, for example, whether the event has occurred may be reported in the form of a 1-bit or 2-bit indicator to represent the role/state of the UE. For example, the base station may be informed of whether and/or how many times a change in the role/state of the UE has occurred during a specific time after the most recent time when the UE deviated from its predicted position.

Conversely, for example, when the transmitting UE performs message transmission based on the UE position prediction, role/state information of the UE such as VRU_Role_On, VRU-ACTIVE may be included in the message or transmitted together to the server/cloud.

For reference, based on the current VAM standard, if the role/state of the VRU is VRU_Role_Off, VRU-IDLE, or VRU-PASSIVE, the VRU UE is exceptionally allowed not to generate/transmit (and receive) VAM. For example, if the VRU UE determines that it is in a zero-risk area (e.g., inside a car/bus/building), it may switch to the VRU_ROLE_OFF state, and in this state, the VRU UE does not perform any transmission/reception of VAM, which is a VRU message. For example, based on ETSI TS 103 300-3, if the VRU UE determines that it is in a low-risk area, it may switch its state to VRU-passive, and in this case, the VRU UE is allowed not to transmit a VAM message.

For example, the receiver (e.g., server/cloud) may identify/distinguish which of the events B/D/E (and event A) is the reason for its failure to receive a message during a specific time interval based on the UE information described above.

Proposal 3: In scenario 1 (where the UE position prediction is performed on the side of the transmitting UE), when the transmitting UE generates/transmits a message (if the difference between the actual position and the predicted position is greater than or equal to an allowable error level based on the position prediction-based message generation rule), the transmitting UE may include information (hereinafter, INFO_A) for the time of the last message it previously generated/transmitted and the time of the generation/transmission of the message it is currently trying to transmit in the message (or together with the ITS message for the UE in the form of a separate message) and transmit it to the server/cloud.

Herein, for example, INFO_A may include one or more of the information listed below.
- The length of the interval between the last previous message transmission time and the current message transmission time
- The last previous message transmission time
- The current message transmission time
- Information that converts/expresses the length of the interval between the last previous message transmission time and the current message transmission time into the message generation period (e.g., T_GenVamMax) defined in the existing ITS standard related to the message transmitted by the UE (and the message generation period used for conversion/expression) (e.g., the number of skipped (periodic) message transmissions when the length of the interval between the last message transmission time and the current message transmission time is converted into the message generation period (e.g., T_GenVamMax) (e.g., if the length of the interval from the last message transmission time to the current message transmission time is 10.5 seconds and T_GenVamMax is 1 second, it is calculated that 10 message transmissions are skipped))

For example, the receiving UE may determine, based on INFO_A, whether the reason it did not receive a message during a specific time interval is that the transmitting UE did not generate/transmit the message (e.g., event A/B/E), or that the message was generated/transmitted but the receiving UE failed to receive it (e.g., event C/D).

For example, if the transmitting UE considers "the length of the interval between the last previous message transmission time and the current message transmission time" as INFO_A and transmits the corresponding information along with the message to the server/cloud, the server/cloud may calculate the difference between the time of reception of the message (including INFO_A) it received and the time of reception of the last message among the messages it actually received from the transmitting UE before that. In addition, the server/cloud may compare the value it calculated with the value of INFO_A it received, and the server/cloud may determine whether the transmitting UE did not actually generate/transmit the message or the transmitting UE generated/transmitted the message but failed to receive it.

Proposal 4: In scenario 1 (where the UE position prediction is performed on the side of the transmitting UE), when the transmitting UE generates/transmits a message (if the difference between the actual position and the predicted position is greater than or equal to an allowable error level based on the position prediction-based message generation rule), the transmitting UE may express the cumulative number of messages generated/transmitted by it (from a specific time) in the form of a message counter, and the transmitting UE may transmit the information to the server/cloud by including it in the message (or together with the ITS message for the UE in the form of a separate message).

For example, (when the UE establishes a connection to the server/cloud), the server/cloud may inform the UE of the initial value of the message counter, or the UE may determine the initial value of the message counter as 0 or a random value and report it to the server/cloud. The transmitting UE may increase the value of the counter by 1 (or a pre-configured specific value) every time it generates/transmits a message based on the UE position prediction-based message generation rule.

For example, the receiving UE may determine, based on the message counter, whether the reason it did not receive a message during a specific time interval is that the transmitting UE did not generate/transmit the message (e.g., event A/B/E), or that the message was generated/transmitted but the receiving UE failed to receive it (e.g., event C/D).

Proposal 5: In scenario 1 (where the UE position prediction is performed on the side of the transmitting UE), when the transmitting UE generates/transmits a message (if the difference between the actual position and the predicted position is greater than or equal to an allowable error level based on the position prediction-based message generation rule), if the message generation by the transmitting UE is not triggered for at least a pre-configured time interval (e.g., the maximum value of the message generation/transmission period defined in the existing ITS standard (e.g., 1 second)) or for a period longer than that (e.g., the maximum time interval between messages pre-configured (differently depending on a service/UE type/driving environment of the UE (e.g., road on which it is driving, velocity/speed, position, etc.)) from the time of the last message transmission), the transmitting UE may increase the amount of path history/prediction information included in the next initially transmitted message (to a specific amount or more) and transmit it, or the transmitting UE may include path prediction information in the message and transmit it only in this case. That is, the number of path points related to path history/prediction included in the message may be greater than or equal to a pre-configured specific number. In this case, the number of path points related to path history/prediction that should be included in the message may be configured to be greater than the maximum (or minimum) number of path points when the message is triggered within a pre-configured time interval.

For example, the receiving UE may determine, based on the number of path points related to path history/prediction included in the message it received, whether the reason it did not receive a message during a specific time interval is that the transmitting UE did not generate/transmit the message (e.g., event A/B/E), or that the message was generated/transmitted but the receiving UE failed to receive it (e.g., event C/D).

Meanwhile, based on proposal 1 and proposal 2 described above, the transmitter (transmitting UE) may generate/transmit a new message only if the difference between its actual position and the position of the transmitting UE predicted based on information included in the message (which it most recently transmitted) exceeds an allowable error level. Based on the position prediction-based message generation rule, even if the message generation event does not occur, the transmitter (transmitting UE) may transmit/report information for the transmitting UE (e.g., the previously transmitted message or (some/all) mandatory fields included in the message, the event that has occurred at a specific time (and/or time interval) (e.g., A/B/C/D/E)) to the receiver (server/cloud/receiving UE, etc.) between message transmissions generated based on the position prediction.

In this way, based on the position prediction-based message generation rule, even if the message generation event does not occur, it may be possible to transmit predicted path information of the UE (which was most recently calculated/predicted) in the message transmitted between message transmissions generated based on the position prediction. This behavior may be particularly useful when the UE is currently located within an allowable error range, but the difference between the predicted path at the current time and the path prediction included in (or predicted by) the most recent message generated based on the position prediction-based message generation rule is greater than or equal to a specific level.

Proposal 6: based on the position prediction-based message generation rule, even if the message generation event does not occur, if the difference between the path prediction value included in (or predicted by) the most recent message generated based on the position prediction-based message generation rule and the predicted future path at the current time is greater than or equal to a specific level, the transmitter may transmit the latest predicted path information to the server/cloud/receiving UE.

In this case, for example, the difference between the path prediction value included in (or predicted by) the most recent message generated based on the position prediction-based message generation rule and the predicted future path at the current time may be calculated based on the method(s) listed in the examples below.

For example, if the predicted path is represented as the predicted UE position at one or more specific future times (e.g., when expressing the latitude/longitude/altitude-related confidence level and/or the latitude and/or the longitude and/or the altitude at specific future time(s) with (or without) information for the future time(s)), only all/part of the UE position (path point) information for the current time and/or subsequent time(s) may be considered among the UE position information at future time(s) included in the previously transmitted (latest) message. That is, information that has become a path history based on the current time may be excluded. Alternatively, for example, if the predicted path is represented as the predicted UE position at one or more specific future times (e.g., when expressing the latitude/longitude/altitude-related confidence level and/or the latitude and/or the longitude and/or the altitude at specific future time(s) with (or without) information for the future time(s)), only the last N (N>=1) predicted UE position information may be considered among the multiple predicted UE positions included in the message. For example, if the order in which the predicted UE positions are included in the message is assumed to be in the order of positions from the closest time to the farthest time from the time of message generation, only the last N (N>=1) predicted UE position information may be considered among the multiple predicted UE positions included in the message.

For example, the difference between the path prediction value included in the most recent message (or predicted by the message) and the predicted future movement path at the current time may be the average/sum (or weighted sum)/minimum/maximum of the UE position prediction errors at each future time considered in the calculation. Meanwhile, as in the case of weighted sum, among the UE position prediction errors at multiple future times considered in the calculation, a position prediction error at a specific time may have a greater influence (than the position prediction errors at other times) on determining whether to transmit path prediction information to the server/cloud/receiving UE. In this case, the UE position prediction error values at the N (N>=1) times closest to the current time and/or the UE position prediction error values at times with a high confidence level of path prediction may have a greater influence (than the UE position prediction errors at times that are relatively less close to the current time and/or at times with a relatively low confidence level related to path prediction).

For example, if the previously transmitted (latest) message included UE position information for future time(s), but (based on the current time) that information has already become UE position prediction information for time that is now in the past (i.e., if the information that was path prediction at the time of the previous message generation has become path history information based on the current time), the UE may be allowed to transmit the path prediction information predicted at the current time to the server/cloud/receiving UE.

For example, it may also be considered to express the predicted path as the radius of curvature and/or the confidence level. In this case, it may also be possible to operate in the same/similar manner as the example of expressing the predicted path as the UE position (at specific future time(s)) described above.

For example, when transmitting the latest predicted path information to the server/cloud/receiving UE, (1) the information may be included in (or transmitted together with) a message/information transmitted based on proposal 1 and/or proposal 2 (even if the message generation event does not occur based on the position prediction-based message generation rule) and transmitted at the same time, and/or (2) (separately from the message transmission based on proposal 1 and/or proposal 2) "if the difference between the predicted future movement path at the current time and the path prediction value included in (or predicted by) the most recent message generated based on the position prediction-based message generation rule is greater than or equal to a specific level" may be a triggering condition for the generation/transmission of the UE path prediction information obtained at the current (latest) time, and/or (3) "if the difference between the predicted future movement path at the current time and the path prediction value included in (or predicted by) the most recent message generated based on the position prediction-based message generation rule is greater than or equal to a specific level" may be a new message generation condition equivalent to/additionally to the "message generation condition based on the position prediction-based message generation rule".

In the "UE position prediction-based message generation rule" mentioned in (3) above, if the difference between the current position of the transmitting UE that can be predicted based on information for the transmitting UE (e.g., position and/or velocity/speed and/or acceleration and/or heading and/or yaw rate and/or path prediction, etc.) included in the most recent message transmitted by the transmitting UE and its actual current position is greater than or equal to a (pre-)configured allowable position error level, the transmitting UE may generate a new message including its (latest) information. More specifically, in the case of the position of the transmitting UE, if the (most recently) transmitted message includes path prediction information, the UE position prediction value may be obtained based on the information, and if the (most recently) transmitted message does not include path prediction information, the future predicted position of the UE may be calculated based on the UE position/speed/velocity/acceleration/heading/yaw rate values, etc., included in the (most recently) transmitted message.

On the other hand, if "the case where the difference between the predicted future movement path at the current time and the path prediction value included in (or predicted by) the most recent message generated based on the position prediction-based message generation rule is greater than or equal to a specific level" is applied as an additional new message generation condition, even if the difference between the current position of the transmitting UE that can be predicted based on the information for its own state included in the most recently transmitted message (e.g., position and/or speed/velocity and/or acceleration and/or heading and/or yaw rate and/or path prediction, etc.) and its actual "current position" is less than or equal to a (pre-)configured allowable position error level, a condition for generating a new message by the transmitting UE may be that the difference between the future position/path of the transmitting UE that can be predicted based on the information for its own state included in the most recently transmitted message (e.g., position and/or speed/velocity and/or acceleration and/or heading and/or yaw rate and/or path prediction, etc.) (i.e., the UE's position/path at a point in time that is interpreted as still being in the future among the future positions/paths provided by the UE at a point in time in the past when the message was generated (or the UE's position/path calculated using information that can be used to predict the UE's position/path at a time that is still in the future at the current time)) and the position/path of the transmitting UE at the future time predicted from the current time is greater than a (pre-configured) specific threshold. The new message generated when this condition is satisfied should include information for the position/path of the transmitting UE for the future time at which information update is required because the difference between the future position/path of the transmitting UE that can be predicted based on the information for its own state included in the previous (most recently) transmitted message (e.g., position and/or speed/velocity and/or acceleration and/or heading and/or yaw rate and/or path prediction, etc.) (i.e., the UE's position/path at a point in time that is interpreted as still being in the future among the future positions/paths provided by the UE at a point in time in the past when the message was generated (or the UE's position/path calculated using information that can be used to predict the UE's position/path at a time that is still in the future at the current time)) and the position/path of the transmitting UE at the future time predicted from the current time is greater than a (pre-configured) specific threshold, and this information may be included in a path prediction container. If the message does not include information for the position/path of the transmitting UE for the future time at which information update is required (as described above), information such as velocity/speed and/or acceleration and/or heading and/or yaw rate, etc. that can be used to predict/calculate the information should be included in the new message generated by the transmitting UE. Alternatively, this information may be included together in the new message generated by the transmitting UE for the purpose of using it as assistance data for prediction/calculation of the future position/path of the UE on the side of the transmitting UE, even if the new message generated by the UE includes the position/path information of the transmitting UE for the future time at which information update is required.

For example, assuming an operation case in the method (3) based on proposal 1, the transmitting UE may generate a message and determine information to be included in the message based on the following condition(s).

For example, if the difference between the current actual position of the transmitting UE and the position prediction value is greater than or equal to an allowable error range, the transmitting UE may generate/transmit a new message.

For example, if the difference between the current actual position of the transmitting UE and the position prediction value is within an allowable error range, and/or if the difference between the predicted future movement path of the transmitting UE at the current time and the path prediction value for the future times included in (or predicted by) the most recent message generated based on the position prediction-based message generation rule is greater than or equal to a specific level, the transmitting UE may generate/transmit a new message based on the method (3). In this case, for example, since the difference between the prediction values at the current time and the previous message generation time is greater than or equal to a threshold in terms of the predicted path, the generated new message may include information for the time (UE position/path) that requires an update in the form of path prediction, position/velocity/speed/acceleration/heading/yaw rate, etc.

For example, if the difference between the current actual position of the transmitting UE and the position prediction value is within an allowable error range, and/or if the difference between the predicted future movement path of the transmitting UE at the current time and the path prediction value for the future times included in (or predicted by) the most recent message generated based on the position prediction-based message generation rule is within a specific level, the transmitting UE may transmit (based on proposal 1) the message most recently transmitted by the transmitting UE, mandatory fields included in the message, or some mandatory fields included in the message (e.g., station ID, generation time, position, speed, heading, etc.) to the server/cloud/receiving UE based on a period (e.g., the maximum time interval between messages pre-configured (differently depending on a service/UE type/driving environment of the UE (e.g., road on which it is driving, velocity/speed, position, etc.)) from the time of the last message transmission) longer than a very long period/interval (e.g., the maximum value of the message generation/transmission period defined in the existing ITS standard (e.g., 1 second)). In particular, for example, the transmitting UE may transmit its station ID and/or information for the generation time of the message it most recently generated/transmitted (depending on the prediction-based message generation method) (or the difference between the generation time and the current time). Through this, the transmitting UE may report to the server/cloud/receiving UE that the actual position/path of the transmitting UE (i.e., the UE with the station ID included in the message) after a specific time (i.e., the generation time of the message most recently generated/transmitted by the transmitting UE) is within an allowable error range configured/defined in the prediction-based message generation method.

For example, assuming an operation case in the method (1) based on proposal 1, a message may be transmitted (for the purpose of helping the receiver distinguish/determine whether eventA/B/C/D/E has occurred) even though the message generation event does not occur based on the position prediction-based message generation rule. In this case, if "the difference between the predicted future movement path of the transmitting UE at that time and the path prediction value included in the most recent message generated based on the position prediction-based message generation rule (or that can be predicted by the message) is greater than or equal to a specific level", new predicted path information may be transmitted together with the previously transmitted message, mandatory fields included in the message, or some mandatory fields included in the message (e.g., station ID, generation time, position, speed, heading, etc.). As a more detailed example, the transmitting UE may generate a message and determine information to be included in the message based on the following condition(s).

For example, if the difference between the current actual position of the transmitting UE and the position prediction value is greater than or equal to an allowable error range, the transmitting UE may generate/transmit a message based on the position prediction-based message generation/transmission method.

For example, if the difference between the current actual position of the transmitting UE and the position prediction value is within an allowable error range, and/or if the difference between the predicted future movement path of the transmitting UE at the current time and the path prediction value included in (or predicted by) the most recent message generated based on the position prediction-based message generation rule is within a specific level, the transmitting UE may transmit (based on proposal 1) the message most recently transmitted by the transmitting UE, mandatory fields included in the message, or some mandatory fields included in the message (e.g., station ID, generation time, position, speed, heading, etc.) to the server/cloud/receiving UE based on a period (e.g., the maximum time interval between messages pre-configured (differently depending on a service/UE type/driving environment of the UE (e.g., road on which it is driving, velocity/speed, position, etc.)) from the time of the last message transmission) longer than a very long period/interval (e.g., the maximum value of the message generation/transmission period defined in the existing ITS standard (e.g., 1 second)). In particular, for example, the transmitting UE may transmit its station ID and/or information for the generation time of the message it most recently generated/transmitted (depending on the prediction-based message generation method) (or the difference between the generation time and the current time). Through this, the transmitting UE may report to the server/cloud/receiving UE that the actual position/path of the transmitting UE (i.e., the UE with the station ID included in the message) after a specific time (i.e., the generation time of the message most recently generated/transmitted by the transmitting UE) is within an allowable error range configured/defined in the prediction-based message generation method.

For example, if the difference between the current actual position of the transmitting UE and the position prediction value is within an allowable error range, and/or if the difference between the predicted future movement path of the transmitting UE at the current time and the path prediction value included in (or predicted by) the most recent message generated based on the position prediction-based message generation rule is greater than or equal to a specific level, the transmitting UE may transmit predicted path information of the transmitting UE at the current time to the server/cloud/receiving UE, together with the message most recently transmitted by the transmitting UE, mandatory fields included in the message, or some mandatory fields included in the message (e.g., station ID, generation time, position, speed, heading, etc.). In particular, for example, the transmitting UE may transmit its station ID and/or the generation time of the message it most recently generated/transmitted (based on the prediction-based message generation method) (or the difference between the generation time and the current time) and/or the predicted path information of the transmitting UE at the current time. Through this, the transmitting UE may report to the server/cloud/receiving UE that the actual position/path of itself (i.e., the UE with the station ID included in the message) after a specific time (i.e., the generation time of the message most recently generated/transmitted by the transmitting UE) is within an allowable error range configured/defined in the prediction-based message generation method, but that the predicted path after the current time has an error greater than or equal to a specific level compared to the one reported by the transmitting UE at the previous time (and the latest path prediction information). Additionally, in this case, for example, information such as the current position/velocity/speed/acceleration/heading of the UE may also be transmitted to the server/cloud/receiving UE. In this case, the server/cloud/receiving UE that has received the information may utilize this information (as well as the path prediction information generated/transmitted by the transmitting UE) to predict the future position/path of the transmitting UE.

The side that has received the message including the new predicted path information based on the above operation may interpret the message as "the message is received because the message generation event occurs based on the position prediction-based message generation rule (i.e., the current position of the UE is within a (pre-configured) allowable error level)", but "there is a meaningful change (greater than or equal to the allowable error level) in the predicted path value of the transmitting UE (after the time of receiving the message)". Conversely, if a message is received that is not a message generated because the message generation event occurs based on the position prediction-based message generation rule and does not include path prediction information, the side that has received the message may determine that the current position of the transmitting UE is also within a (pre-configured) allowable error level and that the transmitting UE will move along the predicted path in the future. Herein, the path prediction-related allowable error level used for determining whether to transmit predicted path information may be configured differently from the allowable UE position error level used for determining whether to generate the message in the UE position prediction-based message generation method described above.

In addition, for example, the error value of the path prediction value included in the most recent message (or that can be predicted by the message) generated based on the position prediction-based message generation rule and the predicted future movement path at the current time (for determining whether to transmit predicted path information) may be configured differently based on the condition(s) below.
- The type of service that the transmitting (and/or receiving) UE intends to receive, and the related QoS/requirements
- The position of the transmitting (and/or receiving) UE, or whether the transmitting (and/or receiving) UE is located in a predefined geographical area/position
- The current (or predicted) velocity/speed/acceleration/heading/curve turning angle (radius) of the transmitting (and/or receiving) UE
- The number of (surrounding) UEs on the road
- The (maximum/minimum) absolute/relative velocity/speed/direction of surrounding UEs
- The type of road on which the transmitting (and/or receiving) UE is driving (e.g., dedicated motorway, freeway, general road (with relatively low relative/absolute driving velocity/speed compared to freeway), sidewalk, intersection, crosswalk, school zone)
- The maximum/minimum driving velocity/speed allowed on the road/area on which the transmitting (and/or receiving) UE is driving
- The type of transmitting UE (e.g., whether it is VRU, and the VRU profile (e.g., pedestrian, bicycle, powered two wheelers, animal, wheelchair, etc.))

Meanwhile, when the "transmitter" operates based on one or more of the techniques described in proposals 1 to 6, the "receiver (e.g., server/cloud (and receiving UE))" may operate as follows.

Proposal 7: The receiver may operate as follows after receiving a message from the transmitter operating based on at least one of proposals 1 to 6.

(Case 1) If the receiver determines that the transmitting UE has not transmitted a message (i.e., if it determines that it is the event A/B/E), during the time period in which such a case occurs:
Option 1) It may not transmit information for the transmitting UE to the receiving UE, or
Option 2) It may transmit a 1-bit indicator (repeatedly with a (pre-configured) specific period and/or at least once at a (pre-configured non-periodic) specific time) to inform the receiving UE that no information has been transmitted from the transmitting UE, or
Option 3) It may transmit the most recent message it has received from the transmitting UE to the receiving UE (repeatedly with a (pre-configured) specific period and/or at least once at a (pre-configured non-periodic) specific time), or
Option 4) It may transmit part of the information included in the most recent message received from the transmitting UE (e.g., mandatory data fields/elements excluding optional data fields/elements or part of mandatory/optional data elements such as UE position/velocity/speed/acceleration/heading/ID) to the receiving UE through DL (repeatedly with a (pre-configured) specific period and/or at least once at a (pre-configured non-periodic) specific time). If this method is used, the effect of reducing the DL data size can be obtained.

In addition, if the transmitting UE starts message transmission again, the server/cloud may transmit the message it received to the receiving UE as it is through DL.

(Case 2) If the receiver determines that the transmitting UE has transmitted a message (during a specific time interval), but has failed to receive the message (i.e., if it is determined as the event C/D):
- If it is determined that the event C has occurred, the server may request the UE to retransmit a UE-related message that it is expected to have failed to receive in the past, or request the UE to add message-related information that it has previously failed to receive and/or information such as the path history of the VRU UE at the time of transmission and reception of a message that it has previously failed to receive to a message to be transmitted by the UE in the future and transmit it. In addition, after receiving a message that it has failed to receive (or is expected to have failed to receive) or message-related information from the transmitting UE, the server may transmit the message and/or the information to the receiving UE (e.g., surrounding the transmitting UE) through DL. For example, the message and/or the information may be transmitted through unicast, multicast, or broadcast.
- If it is determined that the event D has occurred, the server/cloud may evaluate the current/future collision/accident risk of the UE and the UEs connected to the server/cloud (within the coverage), and determine subsequent actions based on the risk. For example, if the collision/accident risk is greater than or equal to a (pre-configured) specific threshold, the server/cloud may request another server or cloud that is presumed to be connected to the UE to share/transmit the information, or the server/cloud may transmit the last message transmitted by the UE to the server/cloud (or a message including the most recent information that the server has about the UE) to the UEs through DL.

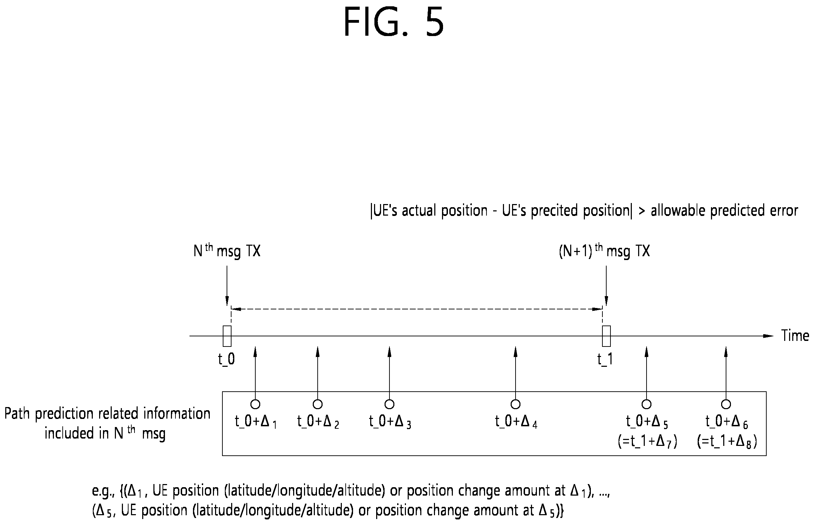

Meanwhile, in the case of the predicted path of the UE in the current ETSI ITS, SAE standards, etc., the future position (latitude/longitude/altitude/confidence level) of the UE may be expressed using the path prediction data field, and information for the time when the UE reaches the position (e.g., the difference between the message generation time and the time when the UE reaches the position) may also be included in the message and transmitted as an optional field. Hereinafter, a method for generating/interpreting path prediction information in the UE position prediction-based message generation/transmission method will be described based on an example of FIG. 5.

FIG. 5 shows a method for generating/interpreting path prediction information, based on an embodiment of the present disclosure. The embodiment of FIG. 5 may be combined with various embodiments of the present disclosure.

Proposal 8: When the transmitting UE generates/transmits a message (based on the UE position prediction-based message generation rule), if the difference between the path prediction information (in particular, the path point information that still corresponds to the future position/path of the UE at the current time) included in the message (immediately) transmitted previously by the transmitting UE and the predicted path/position of the transmitting UE that can be predicted at the current time is greater than or equal to a (pre-configured) threshold, the transmitting UE may include the latest predicted path for the corresponding time/period in the newly generated/transmitted message. Conversely, if the difference between the path prediction information (in particular, the path point information that still corresponds to the future position/path of the UE at the current time) included in the message (immediately) transmitted previously by the transmitting UE and the predicted path/position of the transmitting UE that can be predicted at the current time is within a (pre-configured) threshold, the transmitting UE may not include the predicted pathrelated information for the corresponding time/period in the newly generated/transmitted message.

In the embodiment of FIG. 5, it is assumed that messages are generated/transmitted based on the UE position prediction at times t_0 and t_1. In addition, it is assumed that the difference between the actual position of the transmitting UE and the predicted position value between the two times is within an allowable error range. Therefore, the two messages are consecutive messages generated based on the UE position prediction. In addition, it is assumed that the transmitting UE includes six predicted path information of (t_0+Δ1), ..., (t_0+Δ6) in the message generated/transmitted (based on the UE position prediction) at time t_0, and among these, (t_0+Δ1), ..., (t_0+Δ4) are less than t_1, and (t_0+Δ5), (t_0+Δ6) are greater than t_1.

Under this assumption, referring to FIG. 5, the transmitting UE may generate a message at time t_1 based on the position prediction-based message generation rule. In this case, when predicting the future predicted position/path of the transmitting UE at t_1, if the difference between the predicted value and the predicted path information related to t_1 and subsequent times included in (or predicted by) the message generated/transmitted at time t_0 based on the position prediction-based message generation rule (e.g., predicted path/position information for times (t_0+Δ5) and (t_0+Δ6) in the embodiment of FIG. 5) is less than or equal to a (pre-configured) threshold, the transmitting UE may not include the predicted path/position information for the times (t_0+Δ5) and (t_0+Δ6) in the message generated/transmitted at time t_1, and it the transmitting UE has information that it can currently calculate/obtain among the UE predicted path/position information at a time after time (t_0+Δ6), it may add/include only such information to the message generated/transmitted at time t_1. The server/cloud/receiving UE that has received such a message at time t_1 may determine/interpret that the current position (at time t_1) of the transmitting UE is outside a specific error level compared to the position of the transmitting UE that can be predicted based on the UE-related message received at t_0, but the predicted path/position information for the corresponding UE up to time (t_0+Δ6) received at time t_0 is still valid (i.e., it has an error within a pre-configured threshold compared to the UE path/position that can be predicted at the current time).

In addition, for example, even if the difference between its predicted path/position information for the time interval (t_1) to (t_0+Δ6) predicted at time t_1 by the transmitting UE and the predicted path information related to t_1 and subsequent times included in (or predicted by) the message generated/transmitted at time t_0 based on the position prediction-based message generation rule (e.g., predicted path/position information for the time interval (t_0+Δ5) and (t_0+Δ6) in the embodiment of FIG. 5) is less than or equal to a (pre-configured) threshold, if at that time (or time interval) (1) the value of velocity/speed/acceleration/heading/yaw rate/curve rotation angle of the transmitting UE is greater than or equal to a specific threshold, (2) the transmitting UE is located/driving in an area with a high risk of accidents or where special care is required when driving, such as an intersection, crosswalk, or school zone, or (3) the UE type is VRU (e.g., pedestrian, wheelchair, bicycle, child), and if there is information that can be calculated/obtained among the predicted position/path values of the transmitting UE for the time interval (t_1) to (t_0+Δ6), the transmitting UE may transmit the path prediction information for the corresponding time by including it in the message generated/transmitted at t_1.

This information may be used as assistance information for the UE that has received a message transmitted at t_1 by the transmitting UE to calculate/determine the current/future position/path of the transmitting UE or the risk of collision with the UE based on the information included in the message.

For example, the receiving UE may predict the predicted future position/path of the corresponding UE based on the information included in the message, such as the position/velocity/speed/acceleration/heading/yaw rate/curve rotation angle of the transmitting UE, and the receiving UE may combine (e.g., take the average value) the predicted future position/path of the transmitting UE predicted by itself with the path prediction information of the transmitting UE (calculated by the transmitting UE) included in the message received at t_1, or the receiving UE may select the information with a higher confidence level among the two pieces of information and determine the precited position/path of the UE. This information transfer and calculation method can help the receiving UE to more accurately predict/understand the position/path of the transmitting UE and take actions to prevent accidents/collisions by providing the receiving UE with additional information for the transmitting UE (for time intervals with large changes in such UE movements/dynamics) when the transmitting UE has large changes in position/velocity/speed/acceleration/yaw rate/curve rotation angle (relative to other times/intervals) near t_1.

For example, when predicting the future predicted position/path of the transmitting UE at t_1, only if the difference between the predicted value and the predicted path information related to t_1 and subsequent times included in (or predicted by) the message generated/transmitted at time t_0 based on the position prediction-based message generation rule (e.g., predicted path/position information for times (t_0+Δ5) and (t_0+Δ6) in the embodiment of FIG. 5) is greater than a (pre-configured) threshold, the transmitting UE may add/include "the latest predicted value for the position/path of the transmitting UE related to the time interval (t_1) to (t_0+Δ6) that can be predicted/calculated at the current time" to the message generated/transmitted at time t_1.

The server/cloud/receiving UE that has received such a message at time t_1 may determine/interpret that the current position (at time t_1) of the transmitting UE is outside a specific error level compared to the position of the transmitting UE that can be predicted based on the UE-related message received at t_0. Additionally, the server/cloud/receiving UE may interpret/determine that the transmitting UE has included the latest predicted path information for this time interval in the message generated/transmitted at time t_1 for the purpose of updating the information because the predicted path value related to the time interval (t_1) to (t_0+Δ6) among the predicted path/position information for the corresponding UE received at t_0 has an error exceeding a pre-configured threshold value compared to the predicted path of the corresponding UE that can be predicted at the current time (t_1).

Although the present disclosure describes a case where an ITS message is transmitted through a SL link or a Uu link, the technical idea of the present disclosure is not limited thereto. Various embodiments of the present disclosure may also be applied when transmitting the message through direct communication using communication technologies such as LTE-V2X, NR-V2X, DSRC, and ITS-G5.

In addition, although the present disclosure mainly describes a method of generating/transmitting the message related to the transmission based on the "position of the transmitting UE" predicted by the server/cloud/central-ITS station/MEC (and/or the transmitting UE), various embodiments of the present disclosure may be equally/similarly applied to a method of generating/transmitting the message related to the transmission based on the "absolute/relative value (e.g., amount of change during a specific time interval) of the velocity/speed/acceleration/heading of the transmitting UE and/or the risk of an accident/collision of the transmitting UE" predicted by the server/cloud/central-ITS station/MEC (and/or the transmitting UE).

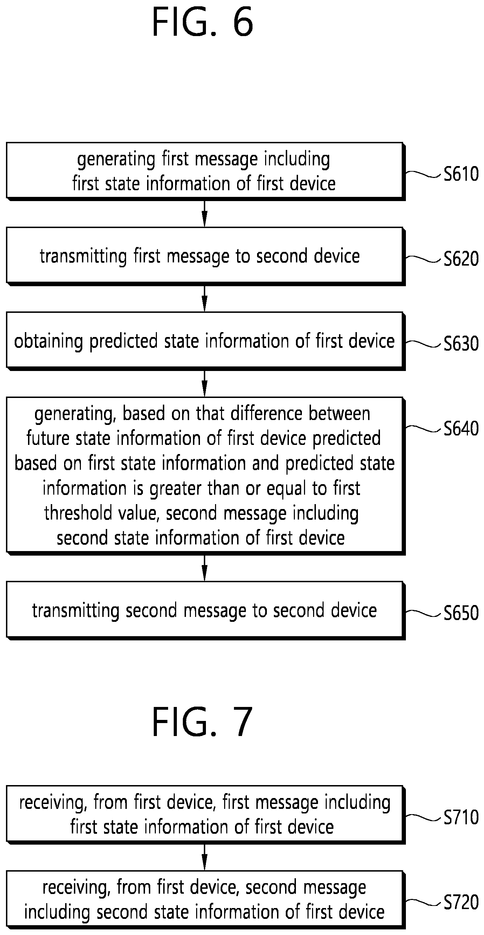

FIG. 6 shows a method for a first device to perform wireless communication, based on an embodiment of the present disclosure. The embodiment of FIG. 6 may be combined with various embodiments of the present disclosure.

Referring to FIG. 6, in step S610, the first device may generate a first message including first state information of the first device. In step S620, the first device may transmit the first message to a second device. In step S630, the first device may obtain predicted state information of the first device. In step S640, the first device may generate, based on that a difference between future state information of the first device predicted based on the first state information and the predicted state information is greater than or equal to a first threshold value, a second message including second state information of the first device. In step S650, the first device may transmit the second message to the second device.

For example, the predicted state information may be information related to a predicted position or a predicted path of the first device predicted based on a state of the first device at a current time.

For example, the future state information may be information related to a future position or a future path of the first device predicted based on the first state information at the current time.

For example, the difference between the future state information and the predicted state information may be an average of multiple difference values between the future state information and the predicted state information predicted at multiple future times.

For example, the difference between the future state information and the predicted state information may be a weighted average of multiple difference values between the future state information and the predicted state information predicted at multiple future times, and the weighted average may be an average obtained by giving a greater weight to a difference value predicted at a near future time than at a distant future time from a current time.

For example, the difference between the future state information and the predicted state information may be a maximum value among multiple difference values between the future state information and the predicted state information predicted at multiple future times.

For example, the difference between the future state information and the predicted state information may be a minimum value among multiple difference values between the future state information and the predicted state information predicted at multiple future times.

For example, the difference between the future state information and the predicted state information may be a sum of multiple difference values between the future state information and the predicted state information predicted at multiple future times.

For example, a time at which the predicted state information may be obtained is after a time at which the first message is generated or a time at which the first message is transmitted.

For example, the first state information may include at least one of information related to a position of the first device, information related to a speed of the first device, information related to an acceleration of the first device, information related to a heading of the first device, information related to a yaw rate of the first device, or information related to a path prediction of the first device.

For example, based on that the difference between the future state information and the predicted state information is greater than or equal to the first threshold value, the second state information may include information related to an updated path prediction of the first device.

For example, based on that the difference between the future state information and the predicted state information is greater than or equal to the first threshold value, and based on that the second state information does not include the information related to the updated path prediction of the first device, the second state information may include at least one of information related to an updated position of the first device, information related to an updated speed of the first device, information related to an updated acceleration of the first device, information related to an updated heading of the first device, or information related to an updated yaw rate of the first device.

For example, based on whether the difference between the future state information and the predicted state information is greater than or equal to the first threshold value, a type of state information included in a message generated by the first device may be different.

Additionally, for example, the first device may generate, based on that the difference between the future state information and the predicted state information is less than the first threshold value, a third message including third state information of the first device. For example, the second state information may include information related to an updated path prediction, and the third state information may not include information related to a path prediction.

For example, based on that a difference between current state information of the first device predicted based on the first state information and a current state of the first device is less than a second threshold value, and based on that the difference between the future state information and the predicted state information is greater than or equal to the first threshold value, the second message including the second state information of the first device may be generated.

For example, the second device may be at least one of a receiving device, a server, a cloud, a central-intelligent transportation system (ITS) station, or a mobile edge computing (MEC).

For example, the first device may be at least one of a transmitting device, a server, a cloud, a central-ITS station, or a MEC.

The proposed method can be applied to devices based on various embodiments of the present disclosure. First, the processor 102 of the first device 100 may generate a first message including first state information of the first device. In addition, the processor 102 of the first device 100 may control the transceiver 106 to transmit the first message to a second device. In addition, the processor 102 of the first device 100 may obtain predicted state information of the first device. In addition, the processor 102 of the first device 100 may generate, based on that a difference between future state information of the first device predicted based on the first state information and the predicted state information is greater than or equal to a first threshold value, a second message including second state information of the first device. In addition, the processor 102 of the first device 100 may control the transceiver 106 to transmit the second message to the second device.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: generating a first message including first state information of the first device; transmitting the first message to a second device; obtaining predicted state information of the first device; generating, based on that a difference between future state information of the first device predicted based on the first state information and the predicted state information is greater than or equal to a first threshold value, a second message including second state information of the first device; and transmitting the second message to the second device.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: generating a first message including first state information of the first device; transmitting the first message to a second device; obtaining predicted state information of the first device; generating, based on that a difference between future state information of the first device predicted based on the first state information and the predicted state information is greater than or equal to a first threshold value, a second message including second state information of the first device; and transmitting the second message to the second device.

Based on an embodiment of the present disclosure, a non-transitory computer-readable storage medium storing instructions may be provided. For example, the instructions, when executed, may cause a first device to perform operations comprising: generating a first message including first state information of the first device; transmitting the first message to a second device; obtaining predicted state information of the first device; generating, based on that a difference between future state information of the first device predicted based on the first state information and the predicted state information is greater than or equal to a first threshold value, a second message including second state information of the first device; and transmitting the second message to the second device.

FIG. 7 shows a method for a second device to perform wireless communication, based on an embodiment of the present disclosure. The embodiment of FIG. 7 may be combined with various embodiments of the present disclosure.

Referring to FIG. 7, in step S710, the second device may receive, from a first device, a first message including first state information of the first device. In step S720, the second device may receive, from the first device, a second message including second state information of the first device. For example, based on that a difference between future state information of the first device predicted based on the first state information and predicted state information is greater than or equal to a first threshold value, the second message including the second state information of the first device may be generated.

The proposed method can be applied to devices based on various embodiments of the present disclosure. First, the processor 202 of the second device 200 may control the transceiver 206 to receive, from a first device, a first message including first state information of the first device. In addition, the processor 202 of the second device 200 may control the transceiver 206 to receive, from the first device, a second message including second state information of the first device. For example, based on that a difference between future state information of the first device predicted based on the first state information and predicted state information is greater than or equal to a first threshold value, the second message including the second state information of the first device may be generated.

Based on an embodiment of the present disclosure, a second device adapted to perform wireless communication may be provided. For example, the second device may comprise: at least one transceiver; at least one processor; and at least one memory connected to the at least one processor and storing instructions. For example, the instructions, based on being executed by the at least one processor, may cause the second device to perform operations comprising: receiving, from a first device, a first message including first state information of the first device; and receiving, from the first device, a second message including second state information of the first device. For example, based on that a difference between future state information of the first device predicted based on the first state information and predicted state information is greater than or equal to a first threshold value, the second message including the second state information of the first device may be generated.

Based on an embodiment of the present disclosure, a processing device adapted to control a second device may be provided. For example, the processing device may comprise: at least one processor; and at least one memory connected to the at least one processor and storing instructions. For example, the instructions, based on being executed by the at least one processor, may cause the second device to perform operations comprising: receiving, from a first device, a first message including first state information of the first device; and receiving, from the first device, a second message including second state information of the first device. For example, based on that a difference between future state information of the first device predicted based on the first state information and predicted state information is greater than or equal to a first threshold value, the second message including the second state information of the first device may be generated.

Based on an embodiment of the present disclosure, a non-transitory computer-readable storage medium storing instructions may be provided. For example, the instructions, when executed, may cause a second device to perform operations comprising: receiving, from a first device, a first message including first state information of the first device; and receiving, from the first device, a second message including second state information of the first device. For example, based on that a difference between future state information of the first device predicted based on the first state information and predicted state information is greater than or equal to a first threshold value, the second message including the second state information of the first device may be generated.

Based on various embodiments of the present disclosure, whether to transmit a message and/or the type of state information included in the message can be determined based on the difference between the future position/path of the device predicted at the current time and the future position/path of the device predicted based on information for the device included in the message transmitted in the past (e.g., position and/or velocity/speed and/or acceleration and/or heading and/or yaw rate and/or path prediction, etc.), and a (pre-configured) specific threshold. Through this, signaling overhead can be reduced and radio resources can be used efficiently. In addition, it is possible to prevent malfunction when a message is not received by making the operation between the transmitting and receiving UEs clear while minimizing the generation of unnecessary new messages.

The various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

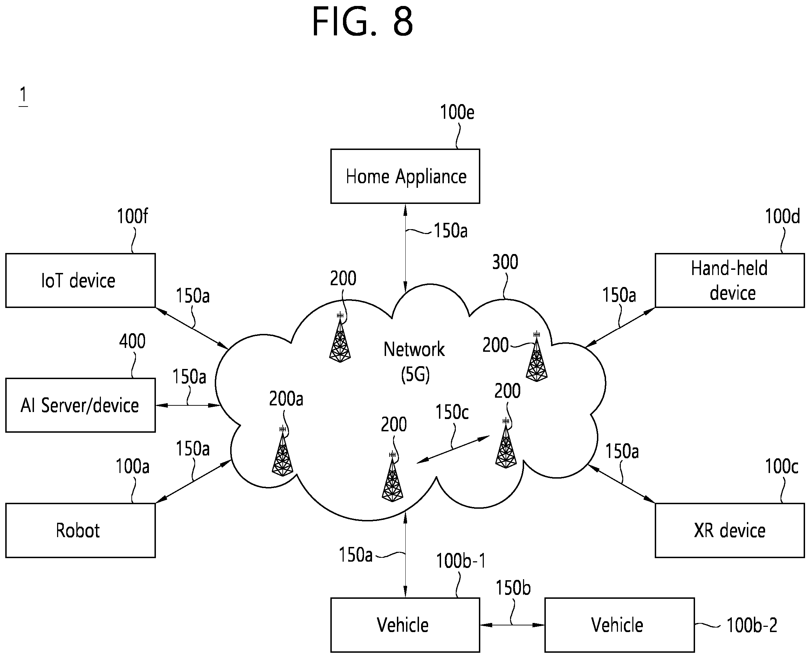

FIG. 8 shows a communication system 1, based on an embodiment of the present disclosure. The embodiment of FIG. 8 may be combined with various embodiments of the present disclosure.

Referring to FIG. 8, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

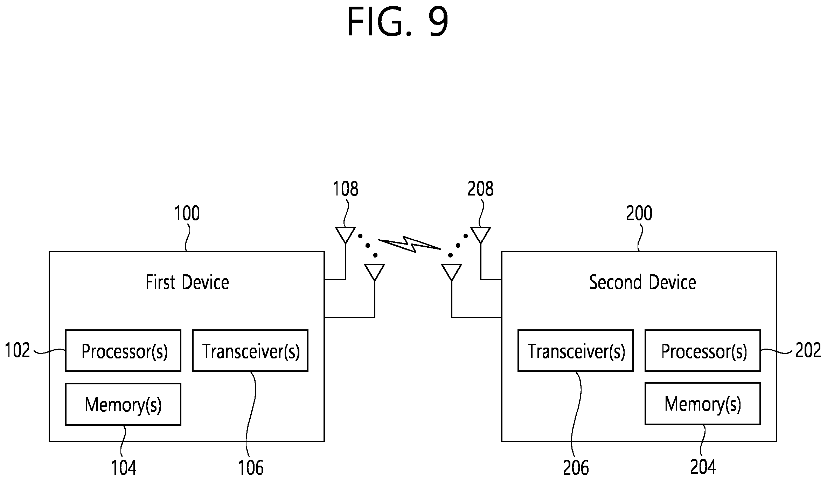

FIG. 9 shows wireless devices, based on an embodiment of the present disclosure. The embodiment of FIG. 9 may be combined with various embodiments of the present disclosure.

Referring to FIG. 9, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 8.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), RandomAccess Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

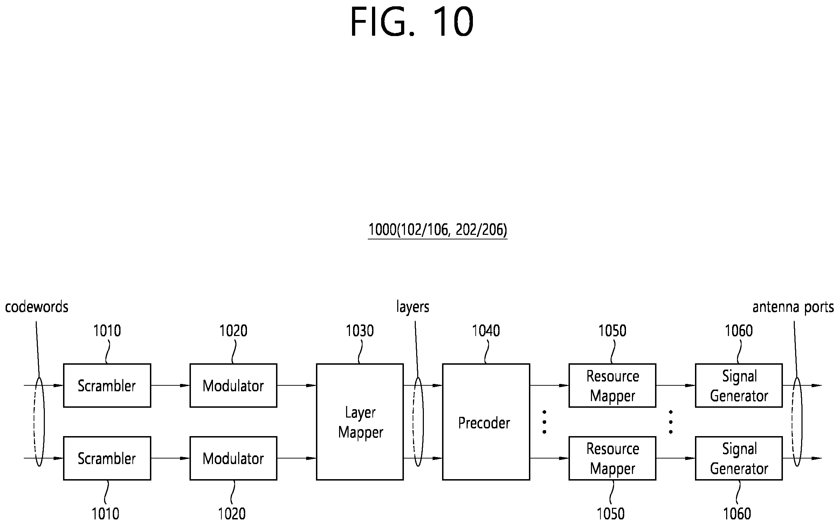

FIG. 10 shows a signal process circuit for a transmission signal, based on an embodiment of the present disclosure. The embodiment of FIG. 10 may be combined with various embodiments of the present disclosure.

Referring to FIG. 10, a signal processing circuit 1000 may include scramblers 1010, modulators 1020, a layer mapper 1030, a precoder 1040, resource mappers 1050, and signal generators 1060. An operation/function of FIG. 10 may be performed, without being limited to, the processors 102 and 202 and/or the transceivers 106 and 206 of FIG. 9. Hardware elements of FIG. 10 may be implemented by the processors 102 and 202 and/or the transceivers 106 and 206 of FIG. 9. For example, blocks 1010 to 1060 may be implemented by the processors 102 and 202 of FIG. 9. Alternatively, the blocks 1010 to 1050 may be implemented by the processors 102 and 202 of FIG. 9 and the block 1060 may be implemented by the transceivers 106 and 206 of FIG. 9.

Codewords may be converted into radio signals via the signal processing circuit 1000 of FIG. 10. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 10. For example, the wireless devices (e.g., 100 and 200 of FIG. 9) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

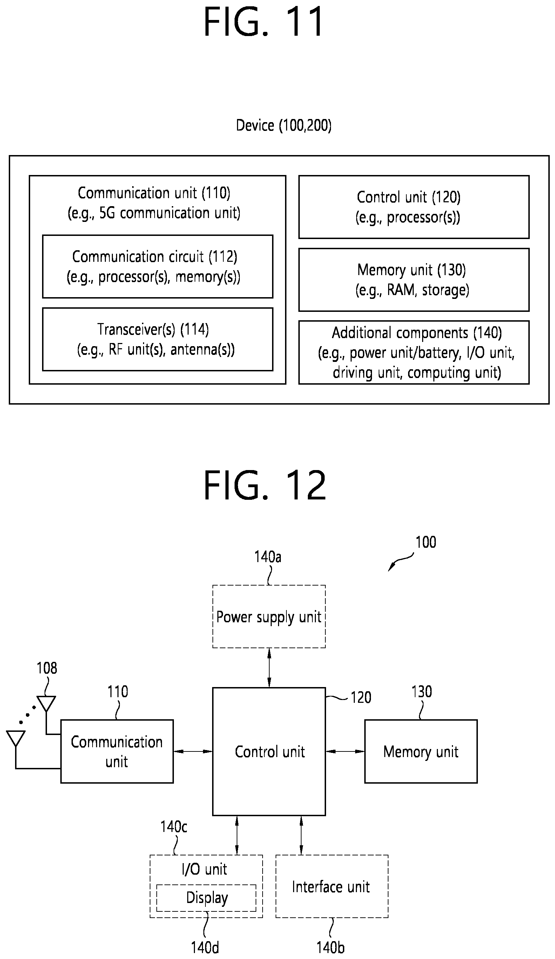

FIG. 11 shows another example of a wireless device, based on an embodiment of the present disclosure. The wireless device may be implemented in various forms according to a use-case/service (refer to FIG. 8). The embodiment of FIG. 11 may be combined with various embodiments of the present disclosure.

Referring to FIG. 11, wireless devices 100 and 200 may correspond to the wireless devices 100 and 200 of FIG. 9 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 9. For example, the transceiver(s) 114 may include the one or more transceivers 106 and 206 and/or the one or more antennas 108 and 208 of FIG. 9. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 8), the vehicles (100b-1 and 100b-2 of FIG. 8), the XR device (100c of FIG. 8), the hand-held device (100d of FIG. 8), the home appliance (100e of FIG. 8), the IoT device (100f of FIG. 8), a digital broadcast terminal, a hologram device, a public safety device, an MTC device, a medicine device, a fintech device (or a finance device), a security device, a climate/environment device, the AI server/device (400 of FIG. 8), the BSs (200 of FIG. 8), a network node, etc. The wireless device may be used in a mobile or fixed place according to a use-example/service.

In FIG. 11, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 11 will be described in detail with reference to the drawings.

FIG. 12 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 12 may be combined with various embodiments of the present disclosure.

Referring to FIG. 12, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 11, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

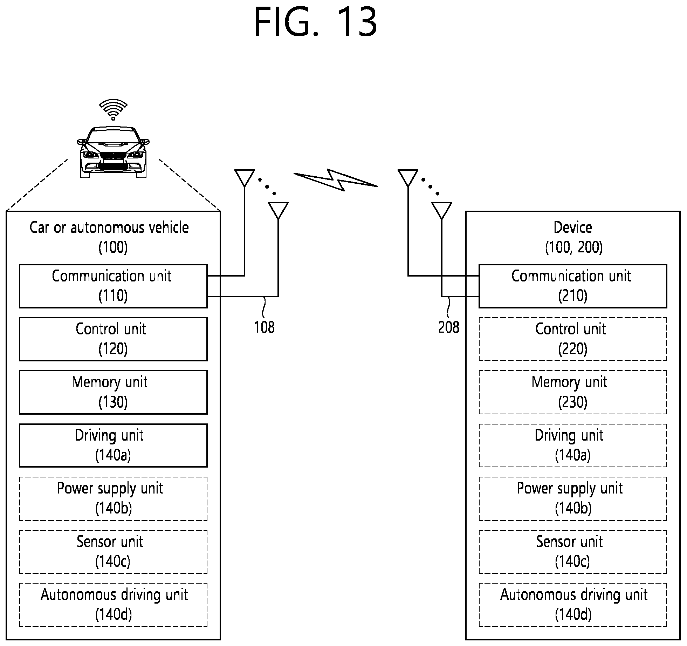

FIG. 13 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 13 may be combined with various embodiments of the present disclosure.

Referring to FIG. 13, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 11, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
generating a first message including first state information of the first device;
transmitting the first message to a second device;
obtaining predicted state information of the first device;
generating, based on that a difference between future state information of the first device predicted based on the first state information and the predicted state information is greater than or equal to a first threshold value, a second message including second state information of the first device; and
transmitting the second message to the second device.

2. The method of claim 1, wherein the predicted state information is information related to a predicted position or a predicted path of the first device predicted based on a state of the first device at a current time, and
wherein the future state information is information related to a future position or a future path of the first device predicted based on the first state information at the current time.

3. The method of claim 1, wherein the difference between the future state information and the predicted state information is an average of multiple difference values between the future state information and the predicted state information predicted at multiple future times.

4. The method of claim 1, wherein the difference between the future state information and the predicted state information is a weighted average of multiple difference values between the future state information and the predicted state information predicted at multiple future times, and
wherein the weighted average is an average obtained by giving a greater weight to a difference value predicted at a near future time than at a distant future time from a current time.

5. The method of claim 1, wherein the difference between the future state information and the predicted state information is a maximum value among multiple difference values between the future state information and the predicted state information predicted at multiple future times.

6. The method of claim 1, wherein a time at which the predicted state information is obtained is after a time at which the first message is generated or a time at which the first message is transmitted.

7. The method of claim 1, wherein the first state information includes at least one of information related to a position of the first device, information related to a speed of the first device, information related to an acceleration of the first device, information related to a heading of the first device, information related to a yaw rate of the first device, or information related to a path prediction of the first device.

8. The method of claim 1, wherein, based on that the difference between the future state information and the predicted state information is greater than or equal to the first threshold value, the second state information includes information related to an updated path prediction of the first device, and
wherein, based on that the difference between the future state information and the predicted state information is greater than or equal to the first threshold value, and based on that the second state information does not include the information related to the updated path prediction of the first device, the second state information includes at least one of information related to an updated position of the first device, information related to an updated speed of the first device, information related to an updated acceleration of the first device, information related to an updated heading of the first device, or information related to an updated yaw rate of the first device.

9. The method of claim 1, wherein, based on whether the difference between the future state information and the predicted state information is greater than or equal to the first threshold value, a type of state information included in a message generated by the first device is different.

10. The method of claim 1, further comprising:
generating, based on that the difference between the future state information and the predicted state information is less than the first threshold value, a third message including third state information of the first device,
wherein the second state information includes information related to an updated path prediction, and the third state information does not include information related to a path prediction.

11. The method of claim 1, wherein, based on that a difference between current state information of the first device predicted based on the first state information and a current state of the first device is less than a second threshold value, and based on that the difference between the future state information and the predicted state information is greater than or equal to the first threshold value, the second message including the second state information of the first device is generated.

12. The method of claim 1, wherein the second device is at least one of a receiving device, a server, a cloud, a central-intelligent transportation system (ITS) station, or a mobile edge computing (MEC).

13. The method of claim 1, wherein the first device is at least one of a transmitting device, a server, a cloud, a central-ITS station, or a MEC.

14. A first device adapted to perform wireless communication, the first device comprising:
at least one transceiver;
at least one processor; and
at least one memory connected to the at least one processor and storing instructions that, based on being executed by the at least one processor, cause the first device to perform operations comprising:
generating a first message including first state information of the first device;
transmitting the first message to a second device;
obtaining predicted state information of the first device;
generating, based on that a difference between future state information of the first device predicted based on the first state information and the predicted state information is greater than or equal to a first threshold value, a second message including second state information of the first device; and
transmitting the second message to the second device.

15. A processing device adapted to control a first device, the processing device comprising:
at least one processor; and
at least one memory connected to the at least one processor and storing instructions that, based on being executed by the at least one processor, cause the first device to perform operations comprising:
generating a first message including first state information of the first device;
transmitting the first message to a second device;
obtaining predicted state information of the first device;
generating, based on that a difference between future state information of the first device predicted based on the first state information and the predicted state information is greater than or equal to a first threshold value, a second message including second state information of the first device; and
transmitting the second message to the second device.

16. A non-transitory computer-readable storage medium storing instructions that, when executed, cause a first device to perform operations comprising:
generating a first message including first state information of the first device;
transmitting the first message to a second device;
obtaining predicted state information of the first device;
generating, based on that a difference between future state information of the first device predicted based on the first state information and the predicted state information is greater than or equal to a first threshold value, a second message including second state information of the first device; and
transmitting the second message to the second device.

17. A method for performing wireless communication by a second device, the method comprising:
receiving, from a first device, a first message including first state information of the first device; and
receiving, from the first device, a second message including second state information of the first device,
wherein, based on that a difference between future state information of the first device predicted based on the first state information and predicted state information is greater than or equal to a first threshold value, the second message including the second state information of the first device is generated.

18. A second device adapted to perform wireless communication, the second device comprising:
at least one transceiver;
at least one processor; and
at least one memory connected to the at least one processor and storing instructions that, based on being executed by the at least one processor, cause the second device to perform operations comprising:
receiving, from a first device, a first message including first state information of the first device; and
receiving, from the first device, a second message including second state information of the first device,
wherein, based on that a difference between future state information of the first device predicted based on the first state information and predicted state information is greater than or equal to a first threshold value, the second message including the second state information of the first device is generated.

19. A processing device adapted to control a second device, the processing device comprising:
at least one processor; and
at least one memory connected to the at least one processor and storing instructions that, based on being executed by the at least one processor, cause the second device to perform operations comprising:
receiving, from a first device, a first message including first state information of the first device; and
receiving, from the first device, a second message including second state information of the first device,
wherein, based on that a difference between future state information of the first device predicted based on the first state information and predicted state information is greater than or equal to a first threshold value, the second message including the second state information of the first device is generated.

20. A non-transitory computer-readable storage medium storing instructions that, when executed, cause a second device to perform operations comprising:
receiving, from a first device, a first message including first state information of the first device; and
receiving, from the first device, a second message including second state information of the first device,
wherein, based on that a difference between future state information of the first device predicted based on the first state information and predicted state information is greater than or equal to a first threshold value, the second message including the second state information of the first device is generated.
